# EUROPEAN PATENT SPECIFICATION

(11) **EP 2 933 599 B1**
(45) Date of publication and mention of the grant of the patent: **11.03.2020**
(21) Application number: 13863540.4
(22) Date of filing: 14.11.2013
(51) Int. Cl.: G01B 11/00, G01C 3/06

(54) **METHOD AND DEVICE FOR MEASURING DISPLACEMENT**
VERFAHREN UND VORRICHTUNG ZUR VERSCHIEBUNGSMESSUNG
PROCÉDÉ ET DISPOSITIF DE MESURE DE DÉPLACEMENT

(30) Priority: 12.12.2012 JP 2012271349
(43) Date of publication of application: 21.10.2015
(73) Proprietor: Omron Corporation, Kyoto-shi, Kyoto 600-8530 (JP)
(72) Inventor: MATSUI, Yuki, Kyoto-shi, Kyoto 600-8530 (JP); SUGA, Takahiro, Kyoto-shi, Kyoto 600-8530 (JP); TAKIMASA, Hiroaki, Kyoto-shi, Kyoto 600-8530 (JP)
(74) Representative: Horn Kleimann Waitzhofer Patentanwälte PartG mbB
(86) International application number: PCT/JP2013/080795
(87) International publication number: WO 2014/091865

(56) References cited:
- EP-A1- 2 251 730
- EP-A1- 2 500 685
- DE-A1-102008 020 902
- DE-A1-102010 016 462
- JP-A- S6 073 405
- JP-A- 2007 024 711
- JP-A- 2007 040 714
- JP-A- 2010 261 960
- JP-A- 2012 208 102

## Description

### TECHNICAL FIELD

The present invention relates to a displacement measurement method for measuring the displacement of a measurement object using a confocal optical system, and a displacement measurement device for performing this measurement method.

### RELATED ART

Conventionally, various types of measurement methods and measurement devices for measuring the displacement of a measurement object have been proposed. For example, JP 2012-208102A (Patent Document 1) discloses a confocal measurement device that measures the displacement of a measurement object using a confocal optical system. This confocal measurement device is provided with a white LED, a diffraction lens that subjects light emitted from the white LED to chromatic aberration in an optical axis direction, an objective lens, a pinhole, and a wavelength measuring unit that measures the wavelength of light that has passed through the pinhole.

DE 10 2010 016 462 A1 describes a device having a light source emitting light of different wavelengths along a light beam path, wherein a diaphragm unit is arranged in the light beam path. A detector detects the light of different wavelengths reflected on a thin layer and an evaluation unit evaluates an intensity distribution of the reflected light based on a wavelength and a distance of the diaphragm unit from a surface area of the thin layer.

DE 10 2008 020 902 A1 describes an arrangement having two highly-reflecting semitransparent mirrors and a Fabry-Perot-Interferometer, which are attached to an object-scanning, chromatic-confocal, spectral two beam- interferometer in a path of rays that is downstream or subordinate to the interferometer and the mirrors. A diffraction grating and a fast complementary metal oxide semiconductor-line scan camera for spectrographic analysis of the electromagnetic radiation are arranged, so that microscopic illustration of an object is provided with spectral analysis of the electromagnetic radiation.

EP 2 251 730 A1 describes methods for providing compensation for non-uniform response of a light source and wavelength detector subsystem of a chromatic point sensor. A resulting set of raw intensity profile signals are analyzed to determine a set of error compensation factors for wavelength-dependent intensity variations that occur in the raw intensity profile signals.

### RELATED ART DOCUMENTS

### PATENT DOCUMENTS

Patent Document 1: JP 2012-208102A

### SUMMARY OF THE INVENTION

### PROBLEM TO BE SOLVED BY THE INVENTION

The confocal measurement device disclosed in JP 2012-208102A measures the displacement of a measurement object based on the wavelength at which the intensity of reflected light from the measurement object is the largest. When the reflectance of the measurement object depends little on the wavelength, it is possible to precisely measure the displacement. However, when the reflectance of the measurement object strongly depends on the wavelength, it is difficult to precisely measure the displacement.

It is an object of the present invention to provide a displacement measurement method that can prevent the wavelength dependence of the reflectance of a measurement object from affecting measurement, and a displacement measurement device that performs this measurement method.

### MEANS FOR SOLVING THE PROBLEMS

The invention is defined in the appended independent claims.

According to an aspect, the present invention is directed to a displacement measurement method including the steps of: emitting light having a dispersed spectrum from a point light source; subjecting the light to axial chromatic aberration and collecting the light subjected to axial chromatic aberration on a measurement object by an optical element; passing that portion of the light collected by the optical element that is focused on the measurement object through an aperture; obtaining a spectrum of the light that has passed through the aperture; measuring a distance between the optical element and the measurement object based on a peak wavelength of the spectrum; obtaining spectral reflectance characteristics of the measurement object; and measuring the distance using the obtained spectral reflectance characteristics while mitigating an error caused by the spectral reflectance characteristics affecting the measurement of the distance.

Further, the step of obtaining spectral reflectance characteristics of the measurement object includes the step of changing the distance between the optical element and the measurement object, and acquiring for each distance a local maximum point of the spectrum of the light that has passed through the aperture.

The displacement measurement method further includes the steps of: detecting a distance between the optical element and the measurement object at which the local maximum point of the spectrum of the light that has passed through the aperture is a local maximum point or a local minimum point in the spectral reflectance characteristics; and setting the detected distance as a reference distance between the optical element and the measurement object when the displacement is measured.

It is preferable that if a plurality of extremal points in the spectral reflectance characteristics have been detected in the detecting step, a distance that corresponds to an extremal point, among the plurality of extremal points, that is closest to the center of a measurement range, which is a range of variation in the distance between the optical element and the measurement object, be set as the reference distance in the setting step.

It is preferable that if a plurality of extremal points in the spectral reflectance characteristics have been detected in the detecting step, a distance that corresponds to a local maximum point, among the plurality of extremal points, that is closest to the center of a measurement range, which is a range of variation in the distance between the optical element and the measurement object, be set as the reference distance in the setting step.

It is preferable that the displacement measurement method further include the step of detecting, while changing the position of the measurement object on which the light is collected by the optical element, a difference between the distance between the optical element and the measurement object, and the reference distance.

According to another aspect, the present invention is directed to a displacement measurement device including: a point light source configured to emit light having a dispersed spectrum; an optical element configured to subject the light to axial chromatic aberration and collect the light subjected to axial chromatic aberration on a measurement object; an aperture through which that portion of the light collected by the optical element that is focused on the measurement object passes; a measurement section configured to obtain a spectrum of the light that has passed through the aperture and measure a distance between the optical element and the measurement object based on a peak wavelength of the spectrum. The measurement section obtains spectral reflectance characteristics of the measurement object, and measures the distance using the obtained spectral reflectance characteristics while mitigating an error caused by the spectral reflectance characteristics affecting the measurement of the distance.

Further, the measurement section changes the distance between the optical element and the measurement object and acquires for each distance a local maximum point of the spectrum of the light that has passed through the aperture.

The measurement section detects a distance between the optical element and the measurement object at which the local maximum point of the spectrum of the light that has passed through the aperture is a local maximum point or a local minimum point in the spectral reflectance characteristics, and sets the detected distance as a reference distance between the optical element and the measurement object when the displacement is measured.

### EFFECTS OF THE INVENTION

According to the present invention, it is possible to prevent the wavelength dependence of the reflectance of a measurement object from affecting measurement. Therefore, according to the present invention, it is possible to measure the displacement of a measurement object with accuracy even when the reflectance of a measurement object strongly depends on a wavelength.

### BRIEF DESCRIPTION OF THE DRAWINGS

- Fig. 1: is a schematic diagram illustrating a configuration of a confocal measurement device that serves as a displacement measurement device according to an embodiment of the present invention.
- Fig. 2: is a diagram illustrating a first example relating to measuring the relative position to a transparent thin film of a measurement object 200.
- Fig. 3: is a waveform chart illustrating the relationship between the positions of a head section (sensor head) and the received light waveforms in a spectrum measurement section.
- Fig. 4: is a graph illustrating the relationship between the positions of the head section 10 (sensor head) and the measured values in the case where the received light waveforms as shown in Fig. 3 occurs.
- Fig. 5: is a graph illustrating the relationship between the positions of the head section 10 (sensor head) and the measured value errors.
- Fig. 6: is a diagram illustrating the relationship between the received light amounts (peak values of the received light intensity that are obtained based on the received light waveforms shown in Fig. 4) and the measured value errors.
- Fig. 7: is a diagram illustrating the reason why a measured value error occurs.
- Fig. 8: is a diagram illustrating a second example relating to measuring the relative position to the measurement object 200.
- Fig. 9: is a diagram illustrating the measurement result obtained when the displacement of a measurement object is measured using the configuration shown in Fig. 8.
- Fig. 10: is a diagram illustrating a third example relating to measuring the relative position to a transparent thin film of the measurement object 200.
- Fig. 11: is a diagram illustrating a fourth example relating to measuring the relative position to a transparent thin film of the measurement object 200.
- Fig. 12: is a diagram illustrating the principle of displacement measurement according to Embodiment 1 of the present invention.
- Fig. 13: is a flowchart illustrating a displacement measurement method of a confocal measurement device, according to Embodiment 1 of the present invention.
- Fig. 14: is a flowchart illustrating a displacement measurement method of the confocal measurement device, according to Embodiment 2 of the present invention.
- Fig. 15: is a diagram illustrating the reason why a local maximum point is selected if there are a plurality of local maximum or minimum points in the spectral reflectance characteristics.
- Fig. 16: is a diagram illustrating the measurement result obtained by the measurement method according to Embodiment 2 of the present invention.
- Fig. 17: is a diagram illustrating an example of another configuration of the confocal measurement device according to the embodiments of the present invention.

### EMDODIMENTS OF THE INVENTION

Hereinafter, embodiments of the present invention will be described in detail with reference to the drawings. Note that in the following description, the same reference numerals are given to the same components, and detailed descriptions thereof will be omitted.

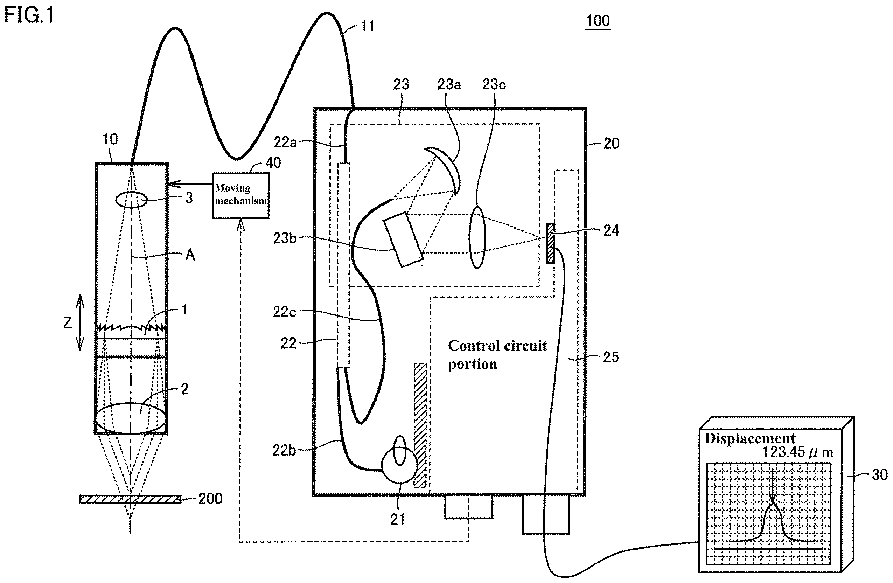

Fig. 1 is a schematic diagram illustrating a configuration of a confocal measurement device that is realized as a displacement measurement device according to an embodiment of the present invention. The confocal measurement device 100 illustrated in Fig. 1 is a displacement measurement device that measures the displacement of a measurement object 200 using a confocal optical system.

The confocal measurement device 100 is provided with a head section 10, an optical fiber 11, a controller section 20, a monitor unit 30, and a moving mechanism 40. The head section 10 includes a confocal optical system. The head section 10 and the controller section 20 are optically connected to each other via the optical fiber 11. The monitor unit 30 displays signals output from the controller section 20.

The head section 10 is provided with a diffraction lens 1, an objective lens 2, and a collective lens 3. The diffraction lens 1 has a focal length that is larger than a difference between the distance between the diffraction lens 1 and the objective lens 2, and the focal length of the objective lens 2.

The diffraction lens 1 is an optical element that subjects light emitted from a light source that emits light having a plurality of wavelengths, to axial chromatic aberration in an optical axis direction (for example, a white light source) (described later). Optical axis A is the optical axis of the diffraction lens 1. Note that the optical axis A of the diffraction lens 1 corresponds to the optical axis of light emitted from the optical fiber 11 and the optical axis of the objective lens 2. Furthermore, the direction of the optical axis A of the diffraction lens 1 corresponds to the direction (Z direction) of the measurement axis of the confocal measurement device 100.

Fine projections and depressions in, for example, a kinoform shape, a binary shape (for example, the shape of steps or stairs), or the like are periodically formed on one surface of the diffraction lens 1. Alternatively, an amplitude-type zone plate that periodically changes light transmittance may be formed on one surface of the diffraction lens 1. Note that the configuration of the diffraction lens 1 is not limited to the above-described configurations.

The diffraction lens 1 may have a configuration in which a pattern that creates chromatic aberration in an optical axis direction is formed on a substrate made from a single material, such as a glass or a resin, for example. Alternatively, the diffraction lens 1 may be constituted by, for example, a glass substrate layer and a resin layer. The resin layer can be obtained by coating the glass substrate with an ultraviolet curable resin, pressing a mold of a desired pattern against the glass substrate surface coated with the ultraviolet curable resin, and irradiating the glass substrate with ultraviolet light to cure the ultraviolet curable resin. According to this method, low-cost manufacturing can be realized. Moreover, since a large part of the diffraction lens 1 is made from the glass substrate, whose shape changes little due to an ambient temperature, the diffraction lens 1 made from a glass substrate layer and a resin layer also has an advantage in terms of temperature characteristics. Note that the optical element that creates axial chromatic aberration is not limited to the diffraction lens 1, and may be realized, for example, by a combination of a plurality of lenses.

The objective lens 2 is an optical element that collects the light that was subjected to chromatic aberration by the diffraction lens 1 on the measurement object 200. The objective lens 2 collimates light reflected from the measurement object 200 into parallel light. The collimated light is incident on the diffraction lens 1. Note that in the configuration illustrated in Fig. 1, the objective lens 2 is disposed closer to the measurement object 200 than the diffraction lens 1. However, the disposition relationship between the objective lens 2 and the diffraction lens 1 is not limited to this.

The following will describe the case where a white light source is employed as a light source that emits light having a plurality of wavelengths. Light emitted from the white light source is guided to the head section 10 via the optical fiber 11. In order for the light exiting the optical fiber 11 to efficiently be used in the diffraction lens 1, it is necessary that the numerical aperture (NA) of the optical fiber 11 and the numerical aperture of the diffraction lens 1 match each other. Therefore, the collective lens 3 is provided between the optical fiber 11 and the diffraction lens 1 to perform adjustment for matching the numerical aperture of the optical fiber 11 with the numerical aperture of the diffraction lens 1.

The optical fiber 11 is a light path from the head section 10 to the controller section 20 and also functions as an aperture. In other words, that portion of the light collected by the objective lens 2 that is focused on the measurement object 200 is to be focused on the aperture portion of the optical fiber 11. Accordingly, the optical fiber 11 functions as an aperture through which light having a wavelength at which the light is not focused on the measurement object 200 does not pass but light focused on the measurement object 200 passes. Using the optical fiber 11 as the light path from the head section 10 to the controller section 20 eliminates the need of providing a pinhole.

The confocal measurement device 100 may also have a configuration in which the optical fiber 11 is not used as the light path from the head section 10 to the controller section 20. However, using the optical fiber 11 as the light path makes it possible to flexibly move the head section 10 with respect to the controller section 20. If the optical fiber 11 is not used as the light path from the head section 10 to the controller section 20, the confocal measurement device 100 needs to have a pinhole. However, by using the optical fiber 11, the confocal measurement device 100 does not need to have a pinhole.

The controller section 20, which serves as a measurement section, is provided with a white LED (Light Emitting Diode) 21, which is a white light source, a branched optical fiber 22, a spectroscope 23, an imaging element 24, and a control circuit portion 25. Although the white LED 21 is used as a point light source that emits white light having a dispersed spectrum, another light source may be used as long as it is a point light source that can emit white light having a dispersed spectrum over the visible light wavelength range.

The branched optical fiber 22 includes one optical fiber 22a on the side of connecting to the optical fiber 11 and two optical fibers 22b and 22c on the opposite side. The optical fiber 22b is optically connected to the white LED 21, and the optical fiber 22c is optically connected to the spectroscope 23. Accordingly, the branched optical fiber 22 can guide light emitted from the white LED 21 to the optical fiber 11, and can guide light returned from the head section 10 via the optical fiber 11 to the spectroscope 23.

The spectroscope 23 includes a concave mirror 23a that reflects light returned from the head section 10, a grating 23b on which the light reflected by the concave mirror 23a is incident, and a collective lens 23c that collects the light emitted from the grating 23b. The spectroscope 23 may have any configuration, such as the Czerny-Turner type, the Littrow type, or the like, as long as it can change the focal position of light returned from the head section 10 on the imaging element 24 depending on its wavelength.

The imaging element 24 measures the intensity of light that is emitted from the spectroscope 23. The imaging element 24 is, for example, a line complementary metal oxide semiconductor (CMOS) or a line charge coupled device (CCD). In the confocal measurement device 100, the spectroscope 23 and the imaging element 24 constitute a spectrum measurement section that measures the intensity of light returned from the head section 10 with respect to each wavelength, that is, obtains the spectrum of light returned from the head section 10, so as to specify the wavelength of the focused light based on the peak value of the intensity, or the like. By obtaining the relationship between the wavelength of the light that is to be focused and the displacement of the measurement object 200 in advance, it is possible to measure the displacement of the measurement object 200. The measurement section may also be constituted only by the imaging element 24 such as a CCD as long as it can measure the intensity of light returned from the head section 10 with respect to each wavelength. The imaging element 24 may also be a two-dimensional CMOS or a two-dimensional CCD.

The control circuit portion 25 is constituted by a circuit for controlling operations of the white LED 21, the imaging element 24, the moving mechanism 40, and the like.

The monitor unit 30 displays signals output by the imaging element 24. For example, the monitor unit 30 plots a spectrum waveform of light returned from the head section 10, and displays that the displacement of the measurement object is 123.45 µm, for example.

The moving mechanism 40 moves, under the control of the control circuit portion 25, the head section 10 in the direction (Z direction) of the measurement axis of the confocal measurement device 100, and positions the head section 10. With the moving mechanism 40, it is possible to change the distance between the head section 10 and the measurement object 200.

The control circuit portion 25 acquires, from the spectrum measurement section, a signal indicating the amount of light (received light amount) received by the spectrum measurement section while changing the distance between the head section 10 and the measurement object 200 using the moving mechanism 40. Note here that "received light amount" refers to peak values of the intensity of the received light that are obtained based on a waveform of the received light acquired by the spectrum measurement section. The control circuit portion 25 positions the head section 10 at a position that corresponds to an extremal point of the waveform that indicates the change in the received light amount with respect to the distance between the head section 10 and the measurement object 200. The distance between the head section 10 and the measurement object 200 at that time serves as a reference distance between the head section 10 and the measurement object 200 when the displacement of the measurement object 200 is measured.

"Extremal point of the received light amount" refers to a local maximum point or local minimum point in the waveform of the received light amount. For example, a point at which the amount of change in the received light amount with respect to the distance is a predetermined value or less can be defined as a local maximum point or local minimum point. "Local maximum point" refers to, for example, a point at which the amount of change in the received light amount with respect to the distance is a gradually decreasing positive value and eventually takes on a predetermined value or less (ideally, 0). "Local minimum point" refers to, for example, a point at which the amount of change in the received light amount with respect to the distance is a gradually increasing negative value and eventually takes on a predetermined value (ideally, 0) (i.e. an absolute value of the amount of change decreases).

The confocal measurement device 100, which is a displacement measurement device according to the embodiments of the present invention, measures the displacement of the measurement object 200 based on a wavelength at which the intensity of received light reflected from the measurement object 200 is the largest. If the reflectance of the measurement object depends little on the wavelength, it is possible to precisely measure the distance. However, in the case of measurement in which a substrate on which an interference film is formed for example, the reflectance thereof largely varies depending on the wavelength. Accordingly, the problem arises that it is difficult to precisely measure the displacement.

In the embodiments of the present invention, prior to measuring the displacement, a waveform of the amount of light received by the measurement section is acquired while changing the distance between the head section 10 and the measurement object 200 using the moving mechanism 40. The head section 10 is positioned at the position that corresponds to a local maximum point or local minimum point of the received light amount. Accordingly, even if the reflectance of the measurement object 200 strongly depends on the wavelength, it is possible to measure the displacement of the measurement object with accuracy.

In this regard, the following will describe first the problems that may be caused when measuring the displacement of a measurement object whose reflectance largely varies depending on a wavelength, and then the solutions of those problems that can be achieved by the confocal measurement device 100 according to the embodiments of the present invention.

### First measurement example and problem thereof

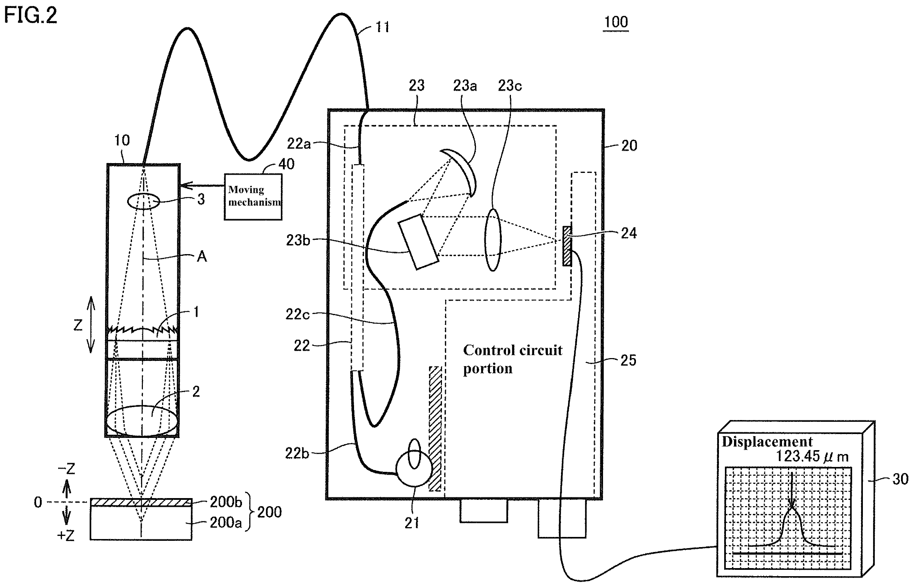

Fig. 2 is a diagram illustrating a first example relating to measuring the relative position to a transparent thin film of the measurement object 200. The measurement of the relative position to the transparent thin film of the measurement object 200 corresponds to measurement of displacement. As shown in Fig. 2, the measurement object 200 is constituted by a substrate 200a and a transparent thin film 200b that is formed on a surface of the substrate 200a. At the start of measurement, the distance between the measurement object 200 and the head section 10 (sensor head) is set to a predetermined distance. The distance from the position of the head section 10 to the measurement object 200 at that time serves as a reference distance. In this embodiment, the head section 10 is movable in the positive Z direction and the negative Z direction with the reference distance defined as a measurement center distance. The range of movement of the head section 10 is the "measurement range" of the confocal measurement device 100.

When light is projected onto the measurement object 200 from the head section 10, rays of the light are reflected not only on the surface of the transparent thin film 200b (boundary between the transparent thin film 200b and air) but also on the boundary between the transparent thin film 200b and the substrate 200a. These rays of reflected light interfere with each other.

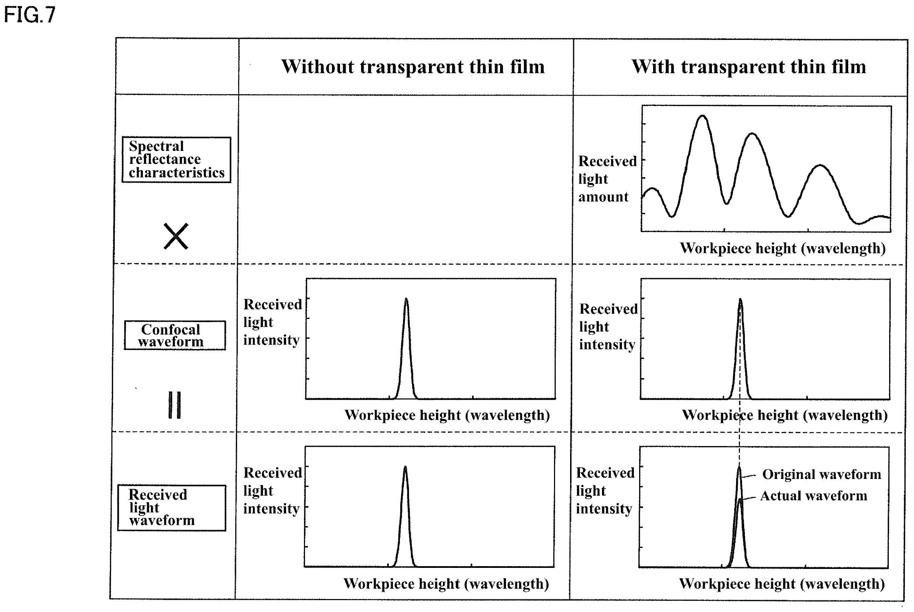

In this embodiment, the head section 10 irradiates the measurement object 200 with white light. It is known that the intensity of interfering light varies depending on not only the thickness of the transparent thin film but also the light wavelength (see JP 2002-819196A, for example). Accordingly, as shown in Fig. 2, by irradiating the substrate on which the transparent thin film is formed with white light so as to acquire a received light waveform of the reflected light, it is possible to obtain a spectrum of the intensity of the received light that varies depending on a wavelength (see JP 2002-819196A, Fig. 7, for example).

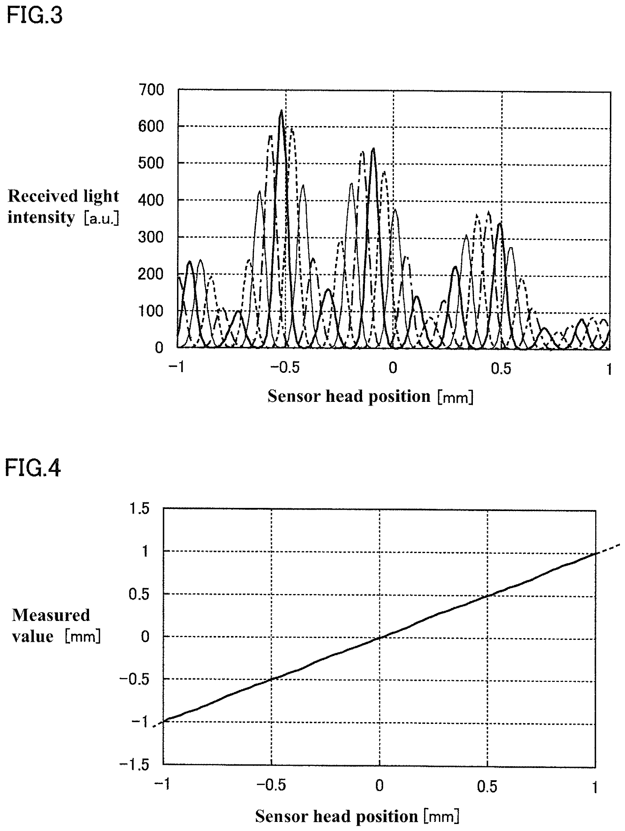

Fig. 3 is a waveform chart illustrating the relationship between the positions of a head section (sensor head) and the waveform of light received by the spectrum measurement section (received light waveform). As shown in Fig. 3, the peak heights of the intensity of the received light (received light intensity) vary due to the influence of interference. In Fig. 3, a plurality of received light waveforms are indicated by different types of lines.

Fig. 4 is a graph illustrating the relationship between the positions of the head section 10 (sensor head) and the measured values in the case where the received light waveforms as shown in Fig. 3 occur. The graph shown in Fig. 4 is the result of the measured values obtained based on the peak positions (see Fig. 3) of the received light waveforms, and the horizontal axis thereof indicates the positions of the head section 10 and the vertical axis thereof indicates the measured values. The relationship of the measured values to the sensor head positions is originally a linear relationship (sensor head positions = measured values). However, as shown in Fig. 4, the relationship of the measured values to the sensor head positions is indicated as a line that slightly undulates compared to a straight line, due to the influence of interference.

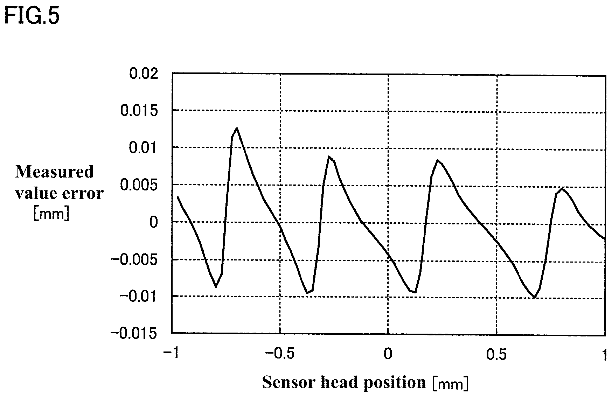

Fig. 5 is a graph illustrating the relationship between the positions of the head section 10 (sensor head) and the measured value errors. "Measured value errors" refers to differences between the original relationship of measured values to sensor head positions (straight line), and the actual relationship (wavy line). Originally, irrespective of the position of the head section 10 (sensor head), the measured value error should be 0. However, as shown in Fig. 5, errors occur that are deviated in the positive and negative directions in an alternating manner depending on the sensor head position. Such errors are caused due to the influence of interference.

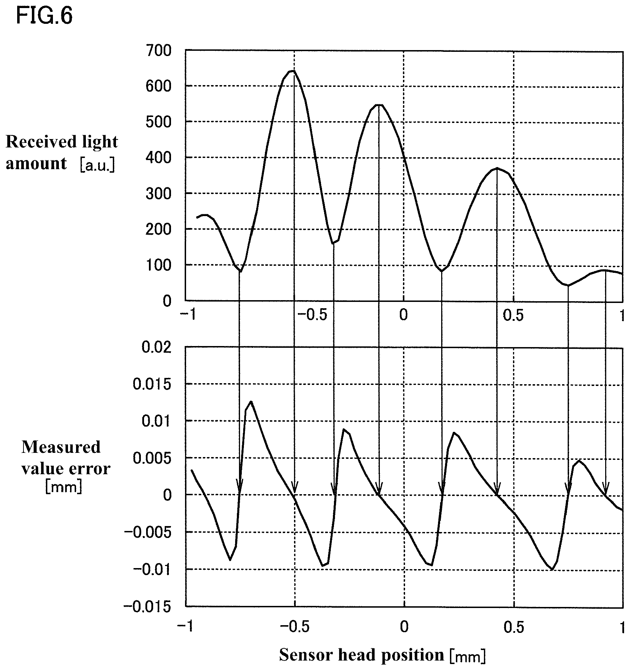

Fig. 6 is a diagram illustrating the relationship between the received light amounts (peak values of the received light intensity that are obtained based on the received light waveform shown in Fig. 4) and the measured value errors. As shown in Fig. 6, the measured value error is almost 0 at any extremal point of the received light amount, that is, a local maximum point or local minimum point of the waveform of the received light amount. Note that the situation that the measured value error is 0 means that the measured value and the true value are equal to each other.

Fig. 7 is a diagram illustrating the reason why a measured value error occurs. As shown in Fig. 7, the received light waveform can be obtained based on the product of multiplying the spectral reflectance characteristics by the confocal waveform. The "spectral reflectance characteristics" can be expressed as the wavelength dependence of the amount of the reflected light received by the spectrum measurement section. If no transparent thin film is provided, the spectral reflectance characteristics show only a gradual change with respect to a wavelength. Accordingly, in Fig. 7, no spectral reflectance characteristics are shown for the case where no transparent thin film is provided.

If no transparent thin film is provided, the confocal waveform and the received light waveform have the same wavelength at which the received light intensity reaches the peak. Therefore, the measurement error is 0. On the other hand, in the case of a substrate on a surface of which a transparent thin film is formed, the amount of the received reflected light to a wavelength largely varies due to interference. If there is a change (inclination) in the spectral reflectance characteristics at the workpiece height (wavelength) at which the confocal waveform reaches the peak, a difference in the wavelength at which the received light intensity reaches the peak is caused between the received light waveform and the confocal waveform due to the product obtained by multiplying the spectral reflectance characteristics by the confocal waveform. This difference corresponds to the measured value error.

### Second measurement example and problem thereof

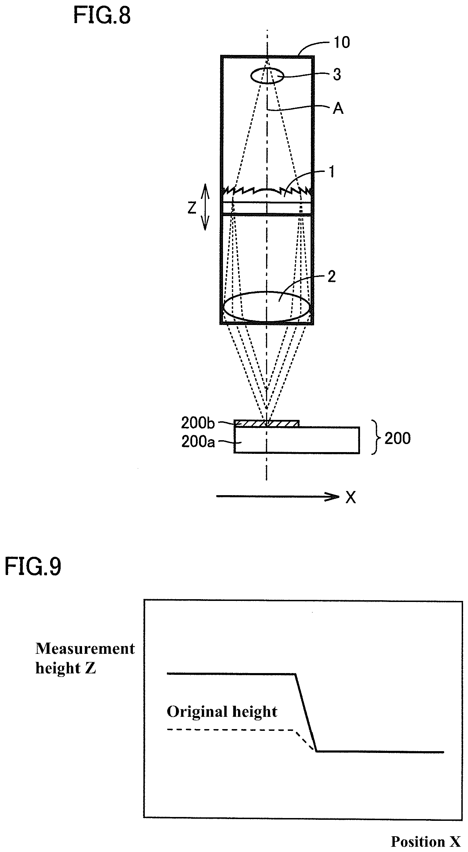

Fig. 8 is a diagram illustrating a second example relating to measuring the relative position to the measurement object 200. Fig. 9 is a diagram illustrating the measurement result obtained by measuring the displacement of the measurement object using the configuration shown in Fig. 8.

As shown in Figs. 8 and 9, the measurement object 200 includes the transparent thin film 200b in a part of the surface of the substrate 200a. In other words, the surface of the measurement object 200 includes a mixture of the part in which the transparent thin film 200b is present and the part in which no transparent thin film 200b is present.

For investigation of, for example, a warpage or wave of the substrate, the height of the measurement object 200 is measured in its substrate (in the X direction, for example). In this case, as shown in Fig. 9, in the part in which the transparent thin film 200b is present, a difference in height that is equal to or larger than the thickness of the transparent thin film 200b is measured due to the influence of interference. Furthermore, the value measured for the difference in height varies depending on the height position of the head section 10. In other words, there is the problem that the value measured for the difference in height varies depending on a wavelength that is used.

### Third measurement example and problem thereof

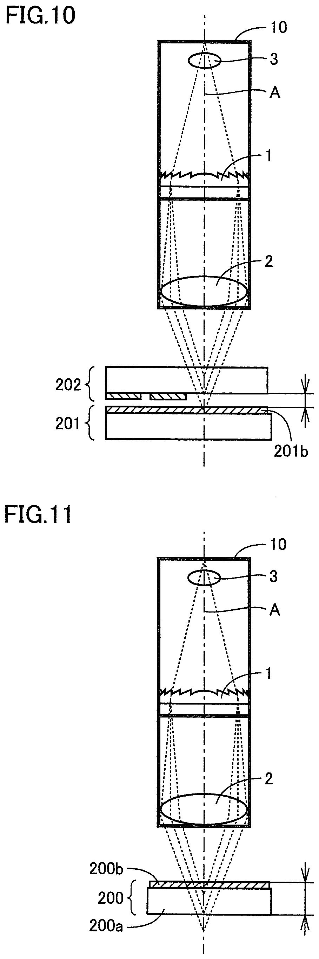

Fig. 10 is a diagram illustrating a third example relating to measuring the relative position to a transparent thin film of the measurement object 200. As shown in Fig. 10, a glass substrate 201 and a mask 202 are disposed so that the gap between the glass substrate 201 and the mask 202 is a predetermined distance. The glass substrate 201 includes, on its surface, a transparent thin film 201b. In this configuration, it is investigated whether or not the gap between the glass substrate 201 and the mask 202 is within a standard range that includes the above-described predetermined distance.

Fig. 11 is a diagram illustrating a fourth example relating to measuring the relative position to the transparent thin film of the measurement object 200. As shown in Fig. 11, the substrate 200a is a transparent substrate such as a glass. In this example, the thickness of the substrate 200a (transparent substrate) is measured.

As shown in Fig. 10, when measuring the gap between the surface on which the transparent thin film is formed and the surface on which no transparent thin film is formed, there may be the problem that the value measured for this gap deviates from the actual value due to the influence of interference. Similarly, in the example shown in Fig. 11, when measuring the thickness of the transparent substrate, there may also be the problem that the value measured for the thickness of the transparent substrate deviates from the actual value due to the influence of interference. There may further be the problem that the value measured for the gap shown in Fig. 10 or the value measured for the thickness of the transparent substrate shown in Fig. 11 varies depending on the position in the Z direction of the head section 10.

According to the embodiments of the present invention, the above-described problems are solved by selecting a wavelength at which there is little influence due to interference and then measuring the displacement. Hereinafter, the embodiments will be described in detail.

### Embodiment 1

Referring again to Fig. 1, in Embodiment 1, the head section 10 is moved in the Z direction by the moving mechanism 40, and reflected light is received by the spectrum measurement section. The control circuit portion 25 receives, from the spectrum measurement section, a signal indicating the amount of the received light. This signal indicates the spectral reflectance characteristics (interference waveform).

The control circuit portion 25 controls the moving mechanism 40 to adjust the distance between the head section 10 and the measurement object 200 so that the distance corresponds to a local maximum point or local minimum point of the amount of the received light in the spectral reflectance characteristics (interference waveform). By changing the position of the head section 10 in the above-described manner, the distance between the head section 10 and the measurement object 200 is adjusted.

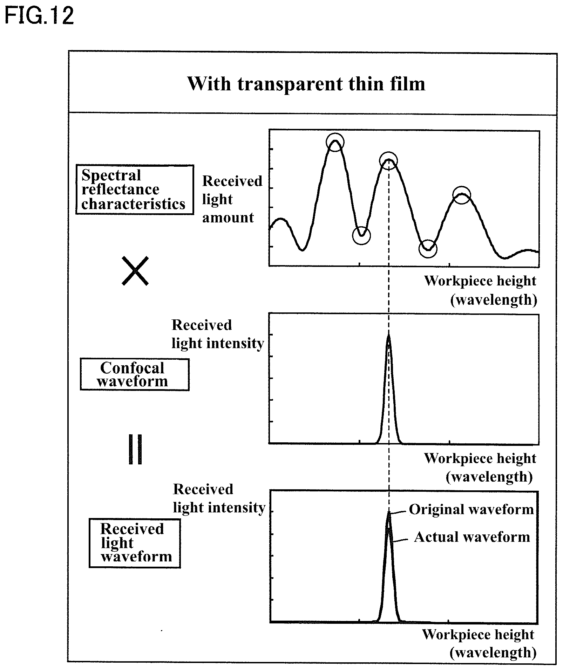

Fig. 12 is a diagram illustrating the principle of displacement measurement according to Embodiment 1 of the present invention. As shown in Fig. 12, a change in the received light amount with respect to the workpiece height (wavelength) is small at the extremal points (local maximum point or local minimum point) in the spectral reflectance characteristics, and the received light amount can be deemed as almost constant at these points. The received light waveform can be obtained based on the product of multiplying the spectral reflectance characteristics by the confocal waveform. Accordingly, it is possible to ensure that the received light waveform and the confocal waveform have the same wavelength at which the received light intensity reaches the peak.

According to Embodiment 1, it is thus possible to precisely measure the distance between the head section 10 and the transparent thin film 200b. This makes it possible to precisely measure a warpage or wave of the substrate on which a transparent thin film is formed, the gap between the substrate and the mask, the thickness of the transparent substrate, and the like.

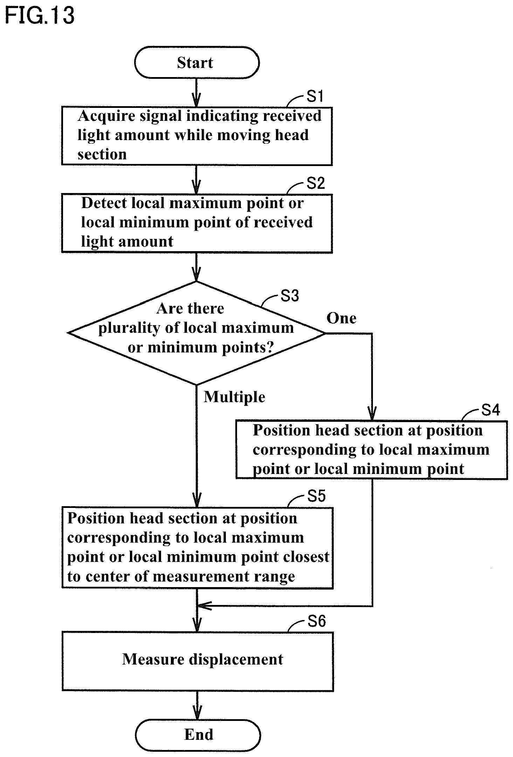

Fig. 13 is a flowchart illustrating a displacement measurement method of the confocal measurement device, according to Embodiment 1 of the present invention. The procedure shown in this flowchart is executed mainly by the control circuit portion 25. As shown in Fig. 13, in step S1, the control circuit portion 25 lets the moving mechanism 40 move the head section 10, and acquires, from the spectrum measurement section, a signal indicating the amount of light received by the spectrum measurement section (that is, a signal indicating the spectral reflectance characteristics).

In step S2, the control circuit portion 25 detects, based on the signal received from the spectrum measurement section, any local maximum points or local minimum points of the received light amount within a measurement range.

In step S3, the control circuit portion 25 determines whether or not there are a plurality of detected local maximum or minimum points of the received light amount. If there is exactly one local maximum point or local minimum point of the received light amount within the measurement range, the position that corresponds to this local maximum point or local minimum point is set as the position of the head section 10 at the start of measurement in step S4. The distance between the head section 10 and the measurement object 200 at that time is the distance at the start of measurement, that is, the measurement center distance (that corresponds to the "reference distance" of the present invention).

On the other hand, if there are a plurality of local maximum or minimum points of the received light amount within the measurement range, the control circuit portion 25 sets the position that corresponds to the local maximum point or local minimum point that is closest to the center of the measurement range as the position of the head section 10 at the start of measurement in step S5. Thus, the measurement center distance is determined.

In steps S4 or S5, the control circuit portion 25 controls the moving mechanism 40 to position the head section 10 at the position at which the distance between the head section 10 and the measurement object 200 is the measurement center distance. After the procedure in step S4 or S5, the displacement is measured in step S6. For example, any one of the foregoing first to third measurement examples is executed. Note that in the case of the third measurement example, while the measurement object 200 is scanned in the X direction so that the position of the measurement object 200 on which light is collected by the head section 10 is changed, a difference between the distance between the head section 10 and the measurement object 20, and the "reference distance" is detected.

According to Embodiment 1, prior to measuring the displacement, the head section 10 is moved in the measurement axis direction. Based on the amount of light received by the measurement section, the head section 10 is positioned at a position that corresponds to a local maximum point or local minimum point (that is, a local maximum point or local minimum point of the received light amount) of the waveform of the spectral reflectance characteristics. Accordingly, it is possible to prevent the spectral reflectance characteristics from affecting the displacement measurement, allowing precise measurement. Accordingly, it is possible to precisely measure, for example, the relative position to the transparent thin film of the measurement object 200.

Moreover, according to Embodiment 1, if there are a plurality of local maximum or minimum points of the received light amount in the measurement range, the head section 10 is positioned at the position that corresponds to the local maximum point or local minimum point of the received light amount that is closest to the center of measurement. Accordingly, measurement is possible using the wavelength at which the emission intensity of a white light source is high, and thus it is possible to increase the S/N ratio of a received-light signal from the spectrum measurement section. As a result, more precise measurement is possible.

### Embodiment 2

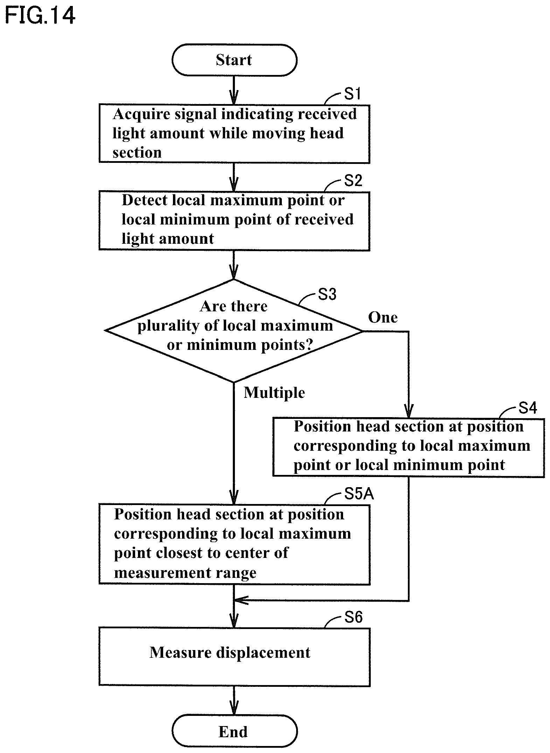

Fig. 14 is a flowchart illustrating a displacement measurement method of the confocal measurement device, according to Embodiment 2 of the present invention. As shown in Figs. 13 and 14, the displacement measurement method according to Embodiment 2 differs from the displacement measurement method according to Embodiment 1 in that instead of step S5, the process of step S5A is executed. In step S5A, the control circuit portion 25 determines the position that corresponds to the local maximum point closest to the center of the measurement range as the position of the head section 10 at the start of measurement, and positions the head section 10 at this position.

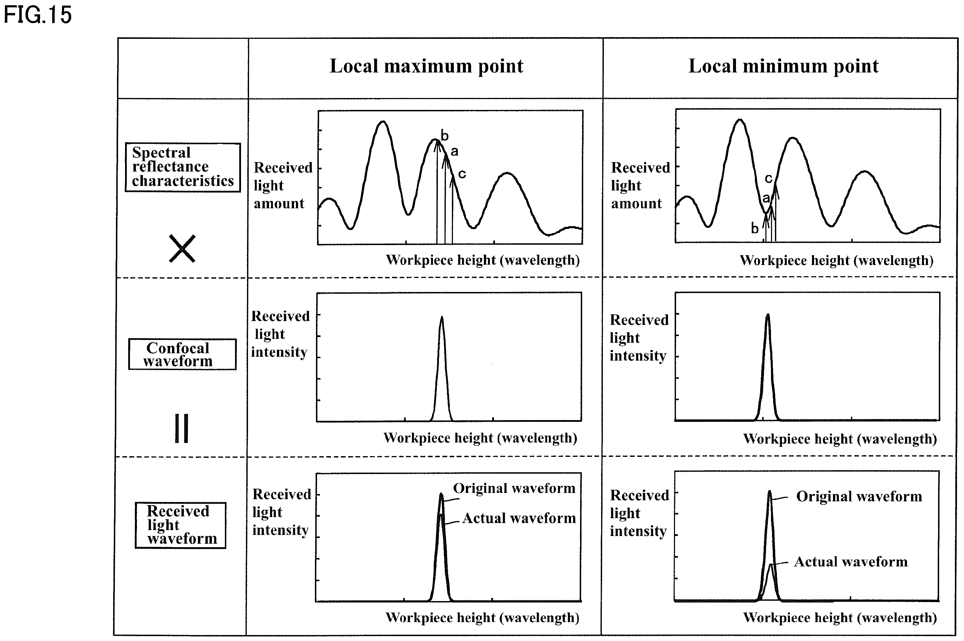

Fig. 15 is a diagram illustrating the reason why a local maximum point is selected if there are a plurality of local maximum or minimum points in the spectral reflectance characteristics. As shown in Fig. 15, "a" denotes the received light amount of the spectral reflectance characteristics at the wavelength indicating the peak positon of the received light intensity, "b" denotes the received light amount of the spectral reflectance characteristics at the wavelength that is slightly deviated from the wavelength corresponding to the received light amount a toward the short wavelength side, and "c" denotes the received light amount of the spectral reflectance characteristics at the wavelength that is slightly deviated from the wavelength corresponding to the received light amount a toward the long wavelength side.

If the position of the head section 10 is adjusted to the position that corresponds to a local maximum point in the spectral reflectance characteristics, a measured value error will occur if the position of the head section 10 is deviated from the position corresponding to the local maximum point. However, the ratio of a change in the spectral reflectance characteristics with respect to the deviation in the position from the local maximum point is small. In other words, the ratio of a change in the received light amount (|b-a | /a or | c-a | /a) is small. Accordingly, a measurement error can be reduced.

On the other hand, if the position of the head section 10 is adjusted to the position that corresponds to a local minimum point in the spectral reflectance characteristics, an error will occur if the position of the head section 10 is deviated from the position corresponding to the local minimum point. In this case, the ratio of a change in the waveform in the spectral reflectance characteristics is abrupt. That is, this ratio of a change in the received light amount (| b-a | /a or | c-a | /a) is larger than the ratio of a change in the received light amount in the vicinity of the local maximum point in the spectral reflectance characteristics. Accordingly, a measurement error is likely to be large.

According to Embodiment 2, the control circuit portion 25 positions the head section 10 at the position that corresponds to the local maximum point closest to the center of the measurement range. Accordingly, a measurement error can further be reduced.

Hereinafter, results obtained by measuring the displacement according to the foregoing embodiments will be described. In the examples, waves of a transparent substrate were measured.

### (1) Conditions

The measurement center distance of the head section 10 is 20 mm, and the measurement range is ± 1 mm. A glass substrate on a surface of which a transparent thin film is partially formed was used as the measurement object 200.

### (2) Calculation of height adjustment value of head section

The head section 10 was moved to the transparent thin film portion of the measurement object 200 and then moved from 21 mm (moved by -1 mm with respect to the measurement center distance) to 19 mm (moved by +1 mm with respect to the measurement center distance) in the Z direction, and measured values obtained during the movement and peaks of the received light amount were plotted. The measurement pitch was 25 µm.

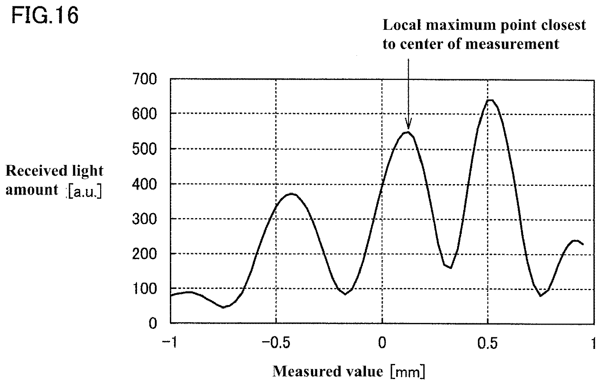

Fig. 16 is a diagram illustrating the measurement result obtained by the measurement method according to Embodiment 2 of the present invention. When the local maximum point closest to the measurement center is obtained with reference to Fig. 16, it corresponds to the position where the obtained measured value is 0.125 mm.

### (3) Height adjustment of head section

The control circuit portion 25 controls the moving mechanism 40 to move the head section 10 to the position at which the measured value of the confocal measurement device 100 is 0.125 mm.

### (4) Measurement

Waves of the measurement object 200 (substrate) were measured. It could be confirmed that precise measurement is possible without being affected by the transparent thin film (interference film)

Note that in Embodiment 1, an extremal point in the spectral reflectance characteristics with respect to the positions of the head section 10 is obtained. However, as shown in Fig. 16, an extremal point may also be obtained with respect to the measured values. At that time, although the measured values include a small error, by obtaining the measured value corresponding to the extremal point in the received light amount, and adjusting the position of the head section 10 while checking the measured value so as to be able to realize the measured value for this extremal point, it is possible to precisely match the position of the head section 10 with the extremal point in the spectral reflectance characteristics.

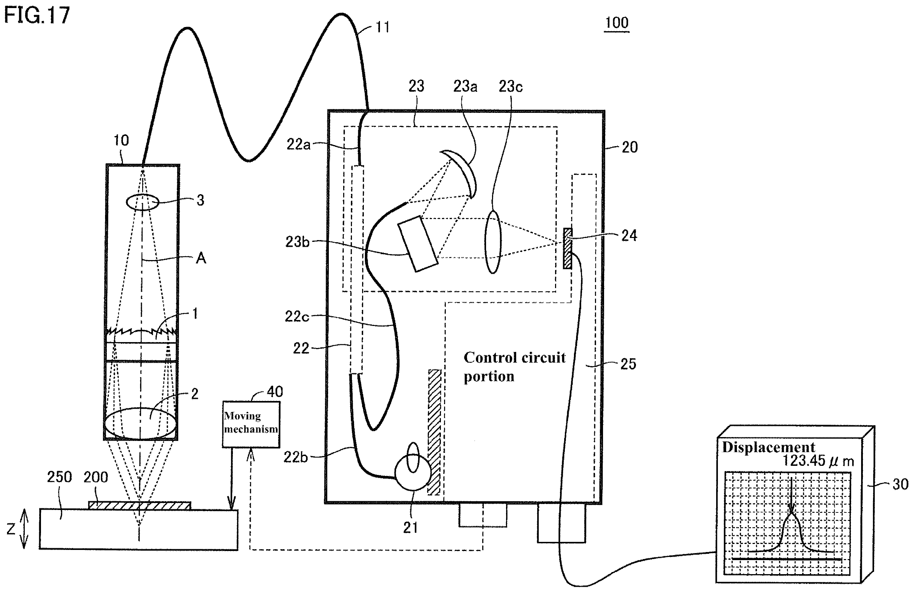

Furthermore, in the foregoing embodiments, the head section 10 is moved. However, as shown in Fig. 17, the moving mechanism 40 may also move a stage 250 on which the measurement object 200 is mounted in the Z direction. Alternatively, it is also possible that the moving mechanism 40 is capable of moving both the head section 10 and the stage 250 concurrently or alternately. That is, the moving mechanism 40 needs only to change the distance between the head section 10 and the measurement object 200 in the measurement axis direction.

Furthermore, in the foregoing embodiments, the control circuit portion that controls the moving mechanism 40 is arranged within the controller section 20, but the present invention is not necessarily limited to this. A configuration is also possible in which the control circuit portion that controls the moving mechanism 40 is provided outside the confocal measurement device 100.

Moreover, the specific method and configuration for obtaining the spectral reflectance characteristics of a measurement object are not limited to the above-described methods and configurations. For example, an optical system as disclosed in JP 2002-81916A (for example, Fig. 6) may be provided separately, and the spectral reflectance characteristics may be obtained using this optical system.

Moreover, the specific method for obtaining the distance between the head section 10 and the measurement object 200 by using the obtained spectral reflectance characteristics while mitigating an error that is caused by the spectral reflectance characteristics affecting the measurement of the distance is not limited to the above-described methods. For example, the distance between the head section 10 and the measurement object 200 may also be obtained based on the peak wavelength of the spectrum of light that has passed through the aperture, the spectrum of light being obtained if the spectral reflectance characteristics of the measurement object are flat and being calculated by conversion using the spectral reflectance characteristics of the measurement object that is recorded.

The embodiments disclosed herein are examples in all aspects and are not to be construed as restricting. The scope of the present invention is shown by the claims rather than the description above.

### INDEX TO THE REFERENCE NUMERALS

1 ... Diffraction lens, 2 ... Objective lens, 3, 23c ... Collective lens, 10 ... Head section, 11, 22a to 22c ... Optical fiber, 20 ... Controller section, 21 ... White LED, 22 ... branched optical fiber, 23 ... Spectroscope, 23a ... Concave mirror, 23b ... Grating, 24 ... Imaging element, 25 ... Control circuit portion, 30 ... Monitor, 40 ... Moving mechanism, 100 ... Confocal measurement device, 200 ... Measurement object, 200a ... Substrate, 200b, 201b ... Transparent thin film, 201 ... Glass substrate, 202 ... Mask, A ... Optical axis

## Claims

1. A displacement measurement method comprising the steps of:
emitting light having a dispersed spectrum from a point light source (21);
subjecting the light to axial chromatic aberration and collecting the light subjected to axial chromatic aberration on a measurement object (200) by an optical element (1, 2);
passing that portion of the light collected by the optical element (1, 2) that is focused on the measurement object (200) through an aperture (11);
obtaining a spectrum of the light that has passed through the aperture (11);
obtaining spectral reflectance characteristics of the measurement object (200); and
measuring a distance between the optical element (1, 2) and the measurement object (200) based on a peak wavelength of the spectrum;
wherein the distance is measured using the obtained spectral reflectance characteristics while mitigating an error caused by the spectral reflectance characteristics affecting the measurement of the distance, and
wherein the step of obtaining spectral reflectance characteristics of the measurement object (200) includes the step of:
changing the distance between the optical element (1, 2) and the measurement object (200), and acquiring for each distance a local maximum point of the spectrum of the light that has passed through the aperture (11);
the method further comprising the steps of:
detecting a distance between the optical element (1, 2) and the measurement object (200) at which the local maximum point of the spectrum of the light that has passed through the aperture (11) is a local maximum point or a local minimum point in the spectral reflectance characteristics; and
setting the detected distance as a reference distance between the optical element (1, 2) and the measurement object (200) when the displacement is measured.

2. The displacement measurement method according to claim 1,
wherein if a plurality of extremal points in the spectral reflectance characteristics have been detected in the detecting step, a distance that corresponds to a local maximum point, among the plurality of extremal points, that is closest to the center of a measurement range, which is a range of variation in the distance between the optical element (1, 2) and the measurement object (200), is set as the reference distance in the setting step.

3. The displacement measurement method according to claim 1,
wherein if a plurality of extremal points in the spectral reflectance characteristics have been detected in the detecting step, a distance that corresponds to an extremal point, among the plurality of extremal points, that is closest to the center of a measurement range, which is a range of variation in the distance between the optical element (1, 2) and the measurement object (200), is set as the reference distance in the setting step.

4. The displacement measurement method according to claim 3,
wherein if a plurality of extremal points in the spectral reflectance characteristics have been detected in the detecting step, a distance that corresponds to a local maximum point, among the plurality of extremal points, that is closest to the center of a measurement range, which is a range of variation in the distance between the optical element (1, 2) and the measurement object (200), is set as the reference distance in the setting step.

5. The displacement measurement method according to claim 3,
further comprising the step of:
detecting, while changing the position of the measurement object (200) on which the light is collected by the optical element (1, 2), a difference between the distance between the optical element (1, 2) and the measurement object (200), and the reference distance.

6. A displacement measurement device comprising:
a point light source (21) configured to emit light having a dispersed spectrum;
an optical element (1, 2) configured to subject the light to axial chromatic aberration and collect the light subjected to axial chromatic aberration on a measurement object (200);
an aperture (11) through which that portion of the light collected by the optical element (1, 2) that is focused on the measurement object (200) passes;
a measurement section (23, 24) configured to obtain a spectrum of the light that has passed through the aperture (11) and measure a distance between the optical element (1, 2) and the measurement object (200) based on a peak wavelength of the spectrum,
wherein the measurement section (23, 24) is configured to obtain spectral reflectance characteristics of the measurement object (200), and to measure the distance using the obtained spectral reflectance characteristics while mitigating an error caused by the spectral reflectance characteristics affecting the measurement of the distance,
wherein the measurement section (23, 24) is configured to change the distance between the optical element (1, 2) and the measurement object (200), and to acquire for each distance a local maximum point of the spectrum of the light that has passed through the aperture (11), and
wherein the measurement section (23, 24) is configured to detect a distance between the optical element (1, 2) and the measurement object (200) at which the local maximum point of the spectrum of the light that has passed through the aperture (11) is a local maximum point or a local minimum point in the spectral reflectance characteristics, and to set the detected distance as a reference distance between the optical element (1, 2) and the measurement object (200) when the displacement is measured.

## Patentansprüche

1. Verschiebungsmessverfahren, das die folgenden Schritte aufweist:
Emittieren von Licht mit einem verbreiterten Spektrum aus einer Punktlichtquelle (21);
Aussetzen des Lichts einer axialen chromatischen Aberration und Sammeln des der axialen chromatischen Aberration ausgesetzten Lichts auf einem Messobjekt (200) mittels eines optischen Elements (1, 2);
Hindurchführen des Abschnitts des Lichts, der durch das optische Element (1, 2) gesammelt wird, das auf das Messobjekt (200) fokussiert ist, durch eine Apertur (11);
Erlangen eines Spektrums des Lichts, das durch die Apertur (11) hindurch gegangen ist;
Erlangen von spektralen Reflexionscharakteristiken des Messobjekts (200); und
Messen eines Abstands zwischen dem optischen Element (1, 2) und dem Messobjekt (200) anhand einer Peakwellenlänge des Spektrums;
wobei der Abstand unter Verwendung der spektralen Reflexionscharakteristiken gemessen wird, während ein die Messung des Abstands beeinflussender Fehler, der durch die spektralen Reflexionscharakteristiken verursacht wird, abgeschwächt wird, und
wobei der Schritt des Erlangens der spektralen Reflexionscharakteristiken des Messobjekts (200) die folgenden Schritte umfasst:
Ändern des Abstands zwischen dem optischen Element (1, 2) und dem Messobjekt (200) und Erlangen eines lokalen Hochpunkts des Spektrums des durch die Apertur (11) hindurchgegangenen Lichts für jeden Abstand;
wobei das Verfahren ferner die folgenden Schritte aufweist:
Erfassen eines Abstands zwischen dem optischen Element (1, 2) und dem Messobjekt (200), bei welchem der lokale Hochpunkt des Spektrums des durch die Apertur (11) hindurchgegangenen Lichts ein lokaler Hochpunkt oder ein lokaler Tiefpunkt der spektralen Reflexionscharakteristiken ist; und
Einstellen des erfassten Abstands als ein Referenzabstand zwischen dem optischen Element (1, 2) und dem Messobjekt (200), wenn die Verschiebung gemessen wird.

2. Verschiebungsmessverfahren gemäß Anspruch 1,
wobei, falls mehrere Extrempunkte in den spektralen Reflexionscharakteristiken in dem Erfassungsschritt erfasst wurden, ein Abstand, der unter den mehreren Extrempunkten einem lokalen Hochpunkt entspricht, der am nächsten zur Mitte eines Messbereichs ist, der ein Bereich einer Variation des Abstands zwischen dem optischen Element (1, 2) und dem Messobjekt (200) ist, in dem Einstellschritt als Referenzabstand eingestellt wird.

3. Verschiebungsmessverfahren gemäß Anspruch 1,
wobei, falls mehrere Extrempunkte in den spektralen Reflexionscharakteristiken in dem Erfassungsschritt erfasst wurden, ein Abstand, der unter den mehreren Extrempunkten einem Extrempunkt entspricht, der am nächsten zur Mitte eines Messbereichs ist, der ein Bereich einer Variation des Abstands zwischen dem optischen Element (1, 2) und dem Messobjekt (200) ist, in dem Einstellschritt als Referenzabstand eingestellt wird.

4. Verschiebungsmessverfahren gemäß Anspruch 3,
wobei, falls mehrere Extrempunkte in den spektralen Reflexionscharakteristiken in dem Erfassungsschritt erfasst wurden, ein Abstand, der unter den mehreren Extrempunkten einem lokalen Hochpunkt entspricht, der am nächsten zur Mitte eines Messbereichs ist, der ein Bereich einer Variation des Abstands zwischen dem optischen Element (1, 2) und dem Messobjekt (200) ist, in dem Einstellschritt als Referenzabstand eingestellt wird.

5. Verschiebungsmessverfahren gemäß Anspruch 3, das ferner den folgenden Schritt aufweist:
Erfassen, während die Position des Messobjekts (200), auf dem das Licht durch das optische Element (1, 2) gesammelt wird, geändert wird, einer Differenz zwischen dem Abstand zwischen dem optischen Element (1, 2) und dem Messobjekt (200), und dem Referenzabstand.

6. Verschiebungsmessvorrichtung, die aufweist:
eine Punktlichtquelle (21), die dazu eingerichtet ist, Licht mit einem verbreiterten Spektrum zu emittieren;
ein optisches Element (1, 2), das dazu eingerichtet ist, das Licht einer axialen chromatischen Aberration auszusetzen, und das der axialen chromatischen Aberration ausgesetzte Licht auf einem Messobjekt (200) zu sammeln;
eine Apertur (11), durch die der Abschnitt des Lichts, der durch das optische Element (1, 2) gesammelt wird, das auf das Messobjekt (200) fokussiert ist, hindurchgeht;
ein Messabschnitt (23, 24), der dazu eingerichtet ist, ein Spektrum des Lichts zu erlangen, das durch die Apertur (11) hindurch gegangen ist, und einen Abstand zwischen dem optischen Element (1, 2) und dem Messobjekt (200) anhand einer Peakwellenlänge des Spektrums zu messen,
wobei der Messabschnitt (23, 24) dazu eingerichtet ist, spektralen Reflexionscharakteristiken des Messobjekts (200) zu erlangen, und den Abstand unter Verwendung der erlangten spektralen Reflexionscharakteristiken zu messen, während ein die Messung des Abstands beeinflussender Fehler, der durch die spektralen Reflexionscharakteristiken verursacht wird, abgeschwächt wird,
wobei der Messabschnitt (23, 24) dazu eingerichtet ist, den Abstand zwischen dem optischen Element (1, 2) und dem Messobjekt (200) zu ändern, und für jeden Abstand einen lokalen Hochpunkt des Spektrums des Lichts zu erlangen, das durch die Apertur (11) hindurch gegangen ist, und
wobei der Messabschnitt (23, 24) dazu eingerichtet ist, einen Abstand zwischen dem optischen Element (1, 2) und dem Messobjekt (200) zu erfassen, bei dem der lokale Hochpunkt des Spektrums des Lichts, das durch die Apertur (11) hindurch gegangen ist, ein lokaler Hochpunkt oder ein lokaler Tiefpunkt in den spektralen Reflexionscharakteristiken ist, und den erfassten Abstand als ein Referenzabstand zwischen dem optischen Element (1, 2) und dem Messobjekt (200) einzustellen, wenn die Verschiebung gemessen wird.

## Revendications

1. Procédé de mesure de déplacement comprenant les étapes consistant à :
émettre une lumière ayant un spectre de dispersion à partir d'une source de lumière ponctuelle (21) ;
soumettre la lumière à une aberration chromatique axiale et collecter la lumière soumise à une aberration chromatique axiale sur un objet de mesure (200) par un élément optique (1, 2) ;
faire passer ladite partie de la lumière collectée par l'élément optique (1, 2) qui est focalisée sur l'objet de mesure (200) à travers une ouverture (11) ;
obtenir un spectre de la lumière qui a traversé l'ouverture (11) ;
obtenir des caractéristiques de réflectance spectrale de l'objet de mesure (200) ; et
mesurer une distance séparant l'élément optique (1, 2) et l'objet de mesure (200) sur la base d'une longueur d'onde de crête du spectre ;
dans lequel la distance est mesurée au moyen des caractéristiques de réflectance spectrale obtenues tout en atténuant une erreur provoquée par les caractéristiques de réflectance spectrale affectant la mesure de la distance, et
dans lequel l'étape d'obtention de caractéristiques de réflectance spectrale de l'objet de mesure (200) comprend l'étape consistant à :
faire varier la distance séparant l'élément optique (1, 2) et l'objet de mesure (200), et acquérir, pour chaque distance, un point local maximal du spectre de la lumière qui a traversé l'ouverture (11) ;
le procédé comprenant en outre les étapes consistant à :
détecter une distance séparant l'élément optique (1, 2) et l'objet de mesure (200) à laquelle le point local maximal du spectre de la lumière qui a traversé l'ouverture (11) est un point local maximal ou un point local minimal dans les caractéristiques de réflectance spectrale ; et
définir la distance détectée en tant que distance de référence séparant l'élément optique (1, 2) et l'objet de mesure (200) lors de la mesure du déplacement.

2. Procédé de mesure de déplacement selon la revendication 1,
dans lequel, si des points d'une pluralité de points extrêmes dans les caractéristiques de réflectance spectrale ont été détectés à l'étape de détection, une distance qui correspond à un point local maximal, parmi les points de la pluralité de points extrêmes, qui est le plus près du centre d'une plage de mesure, qui est une plage de variation de la distance séparant l'élément optique (1, 2) et l'objet de mesure (200), est définie en tant que la distance de référence à l'étape de définition.

3. Procédé de mesure de déplacement selon la revendication 1,
dans lequel, si des points d'une pluralité de points extrêmes dans les caractéristiques de réflectance spectrale ont été détectés à l'étape de détection, une distance qui correspond à un point extrême, parmi les points de la pluralité de points extrêmes, qui est le plus près du centre d'une plage de mesure, qui est une plage de variation de la distance séparant l'élément optique (1, 2) et l'objet de mesure (200), est définie en tant que la distance de référence à l'étape de définition.

4. Procédé de mesure de déplacement selon la revendication 3,
dans lequel, si des points d'une pluralité de points extrêmes dans les caractéristiques de réflectance spectrale ont été détectés à l'étape de détection, une distance qui correspond à un point local maximal, parmi les points de la pluralité de points extrêmes, qui est le plus près du centre d'une plage de mesure, qui est une plage de variation de la distance séparant l'élément optique (1, 2) et l'objet de mesure (200), est définie en tant que la distance de référence à l'étape de définition.

5. Procédé de mesure de déplacement selon la revendication 3, comprenant en outre l'étape consistant à :
détecter, tout en faisant varier la position de l'objet de mesure (200) sur lequel la lumière est collectée par l'élément optique (1, 2), une différence entre la distance séparant l'élément optique (1, 2) et l'objet de mesure (200), et la distance de référence.

6. Dispositif de mesure de déplacement, comprenant :
une source de lumière ponctuelle (21) configurée pour émettre une lumière ayant un spectre de dispersion ;
un élément optique (1, 2) configuré pour soumettre la lumière à une aberration chromatique axiale et pour collecter la lumière soumise à une aberration chromatique axiale sur un objet de mesure (200) ;
une ouverture (11) que traverse ladite partie de la lumière collectée par l'élément optique (1, 2) qui est focalisée sur l'objet de mesure (200) ;
une section de mesure (23, 24) configurée pour obtenir un spectre de la lumière qui a traversé l'ouverture (11) et pour mesurer une distance séparant l'élément optique (1, 2) et l'objet de mesure (200) sur la base d'une longueur d'onde de crête du spectre,
dans lequel la section de mesure (23, 24) est configurée pour obtenir des caractéristiques de réflectance spectrale de l'objet de mesure (200), et pour mesurer la distance au moyen des caractéristiques de réflectance spectrale obtenues tout en atténuant une erreur provoquée par les caractéristiques de réflectance spectrale affectant la mesure de la distance,
dans lequel la section de mesure (23, 24) est configurée pour faire varier la distance séparant l'élément optique (1, 2) et l'objet de mesure (200), et pour acquérir, pour chaque distance, un point local maximal du spectre de la lumière qui a traversé l'ouverture (11), et
dans lequel la section de mesure (23, 24) est configurée pour détecter une distance séparant l'élément optique (1, 2) et l'objet de mesure (200) à laquelle le point local maximal du spectre de la lumière qui a traversé l'ouverture (11) est un point local maximal ou un point local minimal dans les caractéristiques de réflectance spectrale, et pour définir la distance détectée en tant que distance de référence séparant l'élément optique (1, 2) et l'objet de mesure (200) lors de la mesure du déplacement.
